# EUROPEAN PATENT SPECIFICATION

(11) **EP 4 417 649 B1**
(45) Date of publication and mention of the grant of the patent: **02.12.2026**
(21) Application number: 23847733.5
(22) Date of filing: 16.02.2023
(51) Int. Cl.: C08L 23/12, C08L 51/06, C08L 23/08, C08L 23/16, C08L 53/02, C08L 75/04, C08K 3/22, C08K 3/02, C08J 5/18, B32B 27/32

(54) **HALOGEN-FREE FLAME-RETARDANT PP EXTRUDED SHEET FOR HARD FLOOR AND PREPARATION METHOD THEREFOR**
HALOGENFREIE, FLAMMSCHUTZBEHANDELTE PP-EXTRUDIERTE PLATTE FÜR HARTE BÖDEN UND VERFAHREN ZU IHRER HERSTELLUNG
FEUILLE EXTRUDÉE EN PP IGNIFUGÉE SANS HALOGÈNES POUR SOLS DURS ET SON PROCÉDÉ DE FABRICATION

(30) Priority: 26.12.2022 CN 202211671571
(43) Date of publication of application: 21.08.2024
(73) Proprietor: Elegant Home-Tech Co., Ltd., Zhangjiagang, Jiangsu 215626 (CN)
(72) Inventor: SONG, Jincheng, Suzhou, Jiangsu 215626 (CN)
(74) Representative: Eisenführ Speiser
(86) International application number: PCT/CN2023/076334
(87) International publication number: WO 2024/138847

(56) References cited:
- CN-A- 102 675 739
- CN-A- 106 947 158
- CN-A- 109 986 858
- JP-A- 2004 232 334
- JP-B2- 5 399 774
- US-A1- 2005 171 263

## Description

### TECHNICAL FIELD

The present disclosure relates to the technical field of flame-retardant flooring, and in particular to an extruded sheet for preparing a halogen-free flame-retardant polypropylene (PP) rigid flooring and a preparation method of the halogen-free flame-retardant PP rigid flooring.

### BACKGROUND

With the rapid development of society, people have increasingly higher environmental protection requirements for indoor flooring materials. The most common indoor plastic flooring decoration material is polyvinyl chloride (PVC) flooring. The PVC flooring is widely used in homes, hotels, guesthouses, and commercial places due to desirable flame retardancy, high dimensional stability, diverse colors and patterns, and low price. However, the molecular structure of PVC contains chlorine atoms, which may produce toxic gases such as hydrogen chloride and dioxins during the molding, processing, and combustion. Furthermore, a large amount of plasticizers such as dioctyl terephthalate (DOTP) added to the PVC flooring can result in a greater impact on the environment.

Further restrictions on PVC products in developed countries from the Europe and America have led to the need of further development for environmental-friendly plastic flooring materials to meet people's demands for environmental protection performance.

JP 5399774 B2 discloses a floor material which hardly produces harmful gases in combustion, excels in flame retardancy as well as in combustion safety and excels also in heel mark resistance. The floor material 10 has a layer comprising a resin composition containing a resin having no chlorine atom in its chemical structure, a phyllosilicate and a metal hydroxide. One or more first resin components selected from the group consisting of olefinic resins and styrenic resins and a second resin component comprising an acid-modified resin are essentially used as the resin having no chlorine atom in its chemical structure, the first resin components are contained in an amount of 30-99.9 mass% based on the total amount of the resin components, and the second resin component is contained in an amount of 0.1-20 mass% based on the total amount of the resin components. The resin composition contains the phyllosilicate in an amount of 0.5-10 parts by mass and the metal hydroxide in an amount of 50-200 parts by mass, based on 100 parts by mass of the resin having no chlorine atom in its chemical structure.

CN 102675739 A discloses a method for preparing a halogen-free flame-retardant toughening polypropylene composite material, which mainly includes: conducting surface modification on 100 parts by weight of magnesium hydroxide with 2.0 parts by weight of surface modifier in a high-speed mixer to obtain a modified magnesium hydroxide, where the surface modification is conducted at a temperature of 80-120°C and a rotating speed of 1500-2000 rpm for 25-35 min; evenly mixing the modified magnesium hydroxide with 77-80 parts by weight of dry polypropylene, 17-20 parts by weight of a dry polyolefin elastomer, 1.0-3.0 parts by weight of a maleic anhydride graft copolymer, 0.05 parts by weight of an antioxidant and 0.1 parts by weight of a lubricating agent to obtain a mixture; and then mixing and pelleting the mixture in a double-screw extruder, drying extruded aggregates and conducting injection molding on dried extruded aggregates in an injection molding machine. The method is simple in technology and good in repeatability; and the halogen-free flame-retardant toughening polypropylene composite material has good mechanical toughness and flame-retardant property.

JP 2004 232334 A discloses a flame-retardant non-halogen flooring that hardly generates toxic gas in the case of firing and is excellent in abrasion and wear resistance, contamination resistance and workability. The flooring is composed of a surface resin layer, an intermediate resin layer and a backing layer, the surface resin layer is constituted of a resin layer having 200 µm to 1,000 µm in thickness composed of only a resin having no chlorine atom in a chemical constitution, the intermediate resin layer contains 100-350 parts by weight of an inorganic flame-retardant to 100 parts by weight of a resin component, as the resin component, the resin having no chlorine atom in the chemical constitution is only used, noncrystal poly-α-olefin resin not more than 20,000 in average molecular weight is constituted of the resin layer formed by containing 10-50 wt.% to the whole resin component, and a nonwoven fabric composing of the resin having no chlorine atom in the chemical constitution is integrally laminated by heat-melting to form the backing layer on the lower surface side of the intermediate resin layer.

### SUMMARY

In view of this, an objective of the present disclosure is to provide an extruded sheet for preparing a halogen-free flame-retardant PP rigid flooring and a preparation method of the halogen-free flame-retardant PP rigid flooring. In the present disclosure, the halogen-free flame-retardant PP rigid flooring has desirable environmental protection and flame retardancy.

To achieve the above objective, the present disclosure provides the following technical solutions:

The present disclosure provides an extruded sheet for preparing a halogen-free flame-retardant polypropylene (PP) rigid flooring, including the following raw materials in mass percentage:

| | |
|---|---|
| PP | 10% to 30%; |
| inorganic flame retardant | 60% to 80%; |
| toughening agent | 1% to 15%; |
| compatibilizer | 1% to 10%; |
| antioxidant | 0.1% to 0.6%; and |
| lubricant | 0.5% to 2%. |

Preferably, the extruded sheet for preparing the halogen-free flame-retardant PP rigid flooring includes the following raw materials in mass percentage:

| | |
|---|---|
| the PP | 12% to 30%; |
| the inorganic flame retardant | 60% to 75%; |
| the toughening agent | 3% to 10%; |
| the compatibilizer | 1% to 5%; |
| the antioxidant | 0.1% to 0.5%; and |
| the lubricant | 0.5% to 1.5%. |

Preferably, the PP has a melt index of (1-15) g/10 min and a density of (0.89-0.91) g/cm³.

Preferably, the inorganic flame retardant is one or more selected from the group consisting of aluminum hydroxide, magnesium hydroxide, red phosphorus, aluminum oxide, magnesium oxide, and ferric oxide; and
the inorganic flame retardant has a particle size of 1,000 mesh to 5,000 mesh.

Preferably, the compatibilizer is one or more selected from the group consisting of a silane coupling agent, a titanate coupling agent, an aluminate coupling agent, and PP-grafted maleic anhydride;
the toughening agent is one or more selected from the group consisting of an ethylene-propylene random copolymer, a polyolefin elastomer (POE), styrene-ethylene-butylene-stryrene (SEBS), and thermoplastic polyurethane (TPU);
the antioxidant is one or more selected from the group consisting of an antioxidant 1010, an antioxidant 168, an antioxidant 264, and an antioxidant 1076; and
the lubricant is one or more selected from the group consisting of paraffin wax, polyethylene (PE) wax, stearic acid, and calcium stearate.

The present disclosure further provides a preparation method of a halogen-free flame-retardant PP rigid flooring, including the following steps:
mixing the raw materials as defined in the above technical solutions of the extruded sheet for preparing the halogen-free flame-retardant PP rigid flooring to obtain a mixed material;
subjecting the mixed material to twin-screw extrusion molding to obtain the extruded sheet; and
subjecting the extruded sheet to hot-press molding and cutting to obtain the halogen-free flame-retardant PP rigid flooring.

Preferably, the hot-press molding includes: using the extruded sheet as an intermediate layer to allow the hot-press molding together with the PP integrated film and the PP balance layer; and
the hot-press molding is conducted at 150°C to 180°C under 10 bar to 100 bar for 20 min to 60 min.

Preferably, the surface of the PP integrated film is further subjected to coating after the hot-press molding is completed; and the coating includes applying a PP surface repair agent, a PP adhesion base oil, and a PP top oil in sequence.

Preferably, the twin-screw extrusion molding includes twin-screw extrusion at 170°C to 230°C and sheet molding at 200°C to 240°C.

Preferably, the halogen-free flame-retardant PP rigid flooring is further subjected to grooving after the cutting is completed, and a resulting grooved interlocking type is selected from the group consisting of an ordinary interlock and a push-down interlock.

The present disclosure provides an extruded sheet for preparing a halogen-free flame-retardant PP rigid flooring, including the following raw materials in mass percentage: 10% to 30% of PP, 60% to 80% of an inorganic flame retardant, 1% to 15% of a toughening agent, 1% to 10% of a compatibilizer, 0.1% to 0.6% of an antioxidant, and 0.5% to 2% of a lubricant. The PP has desirable processing performance, acid and alkali resistance, chemical reagent resistance, and high- and low-temperature resistance; while a molecular structure of the PP does not contain chlorine, thus showing a high environmental protection performance. The PP as a raw material makes the PP rigid flooring exhibit light weight, high waterproof performance, desirable dimensional stability, excellent high- and low-temperature performance, and environmental friendliness. 60% to 80% of the inorganic flame retardant can give the PP rigid flooring high flame retardancy, such that there is an oxygen index of greater than 29% during combustion.

The present disclosure further provides a preparation method of the halogen-free flame-retardant PP rigid flooring. The preparation method has simple operations and a low cost, and is suitable for industrial mass production.

### DETAILED DESCRIPTION OF THE EMBODIMENTS

The present disclosure provides an extruded sheet for preparing a halogen-free flame-retardant polypropylene (PP) rigid flooring, including the following raw materials in mass percentage:

| | |
|---|---|
| PP | 10% to 30; |
| inorganic flame retardant | 60% to 80%; |
| toughening agent | 1% to 15%; |
| compatibilizer | 1% to 10%; |
| antioxidant | 0.1% to 0.6%; and |
| lubricant | 0.5% to 2%. |

In the present disclosure, the extruded sheet for preparing the halogen-free flame-retardant PP rigid flooring includes 10% to 30%, preferably 12% to 30%, more further preferably 15% to 30% of the PP in mass percentage. The PP is preferably powder PP or granular PP. The PP has a melt index of preferably (1-15) g/10 min, more preferably (2-10) g/10 min, and a density of preferably (0.89-0.91) g/cm³, more preferably 0.9 g/cm³.

In the present disclosure, the extruded sheet for preparing the halogen-free flame-retardant PP rigid flooring includes 60% to 80%, preferably 60% to 75%, more further preferably 60% to 70% of the inorganic flame retardant in mass percentage. The inorganic flame retardant is preferably one or more selected from the group consisting of aluminum hydroxide, magnesium hydroxide, red phosphorus, aluminum oxide, magnesium oxide, and ferric oxide; and the inorganic flame retardant has a particle size of preferably 1,000 mesh to 5,000 mesh, more preferably 2,000 mesh to 4,000 mesh. The inorganic flame retardant is preferably the magnesium hydroxide or a mixture of the magnesium hydroxide and the aluminum hydroxide. When the inorganic flame retardant is the mixture of the magnesium hydroxide and the aluminum hydroxide, the magnesium hydroxide and the aluminum hydroxide are at a mass ratio of preferably (2-4):1, more preferably 3: 1. The magnesium hydroxide and the mixture of the magnesium hydroxide and the aluminum hydroxide decompose and dehydrate to absorb a large amount of heat during the combustion, reducing the temperature of a material combustion zone to inhibit the combustion of the material. The water vapor produced after dehydration and vaporization dilutes solid particles produced and an oxygen content in the air, thus exhibiting a flame-retardant effect on the material. A metal oxide generated after decomposition covers a surface of the burning material, reducing heat conduction and radiation, thereby acting as a flame retardant while significantly reducing a smoke density.

In the present disclosure, the extruded sheet for preparing the halogen-free flame-retardant PP rigid flooring includes 1% to 15%, preferably 3% to 10%, more preferably 5% to 8% of the toughening agent in mass percentage. The toughening agent is preferably one or more selected from the group consisting of an ethylene-propylene random copolymer, a POE, SEBS, and TPU. The ethylene-propylene random copolymer is preferably an ExxonMobil Vistamaxx elastomer, with a model of preferably Vistamaxx 3588FL, Vistamaxx 6102, or Vistamaxx 3980FL.

In the present disclosure, the extruded sheet for preparing the halogen-free flame-retardant PP rigid flooring includes 1% to 10%, preferably 1% to 5%, more preferably 2% to 4% of the compatibilizer in mass percentage. The compatibilizer is preferably one or more selected from the group consisting of a silane coupling agent, a titanate coupling agent, an aluminate coupling agent, and PP-grafted maleic anhydride.

In the present disclosure, the extruded sheet for preparing the halogen-free flame-retardant PP rigid flooring includes 0.1% to 0.6%, preferably 0.1% to 0.5%, more preferably 0.2% to 0.4% of the antioxidant in mass percentage. The antioxidant is preferably one or more selected from the group consisting of an antioxidant 1010, an antioxidant 168, an antioxidant 264, and an antioxidant 1076.

In the present disclosure, the extruded sheet for preparing the halogen-free flame-retardant PP rigid flooring includes 0.5% to 2%, preferably 0.5% to 1.5%, more preferably 0.8% to 1.2% of the lubricant in mass percentage. The lubricant is preferably one or more selected from the group consisting of paraffin wax, PE wax, stearic acid, and calcium stearate.

In the present disclosure, the halogen-free flame-retardant PP rigid flooring has a thickness of preferably 3 mm to 10 mm, more preferably 5 mm to 8 mm.

In the present disclosure, the halogen-free flame-retardant PP rigid flooring has a PP integrated film preferably attached to an upper surface and a PP balance layer preferably attached to a lower surface; and a surface of the PP integrated film is preferably covered with a UV coating oil. The UV coating oil preferably includes a PP surface repair agent, a PP adhesion base oil, and a PP top oil.

The present disclosure further provides a preparation method of a halogen-free flame-retardant PP rigid flooring, including the following steps:
mixing the raw materials as defined in the above technical solutions of the extruded sheet for preparing the halogen-free flame-retardant PP rigid flooring to obtain a mixed material;
subjecting the mixed material to twin-screw extrusion molding to obtain an extruded sheet; and
subjecting the extruded sheet to hot-press molding and cutting to obtain the halogen-free flame-retardant PP rigid flooring.

In the present disclosure, the raw materials of the extruded sheet for preparing the halogen-free flame-retardant PP rigid flooring are mixed to obtain a mixed material. The mixing is preferably conducted using a high speed mixer. The mixing is conducted at preferably 800 rpm to 1,200 rpm, more preferably 900 rpm to 1,000 rpm for preferably 10 min to 20 min, more preferably 15 min.

In the present disclosure, the mixed material after the mixing is in a powder form. Preferably, the powder material is granulated to obtain a granular mixed material. A granulator for the granulation is preferably a parallel twin-screw granulator, with an L/D ratio of preferably 36 to 42. There is no special requirement on a granulation method, and granulation methods well known to those skilled in the art can be used.

In the present disclosure, the mixed material is subjected to twin-screw extrusion molding to obtain an extruded sheet. The twin-screw extrusion molding preferably includes twin-screw extrusion and sheet molding. A twin-screw extruder for the twin-screw extrusion has an L/D ratio of preferably 32 to 42. The twin-screw extruder has a main engine speed of preferably 30 rpm to 70 rpm, more preferably 40 rpm to 60 rpm and a feeding speed of preferably 10 rpm to 60 rpm, more preferably 20 rpm to 50 rpm. The twin-screw extrusion is conducted at 170°C to 230°C. Specifically, 9 temperature zones of the twin-screw extruder have temperatures of 180°C to 190°C, 190°C to 200°C, 190°C to 200°C, 190°C to 200°C, 190°C to 200°C, 190°C to 200°C, 195°C to 205°C, 200°C to 210°C, and 200°C to 210°C.

In the present disclosure, the sheet molding is preferably conducted using a sheet mold. The sheet mold is at preferably 200°C to 240°C, more preferably 210°C to 230°C.

In the present disclosure, after the twin-screw extrusion molding is completed, the extruded sheet is preferably cooled. The cooling is preferably conducted using a multi-roller calendering cooling and setting machine at preferably 40°C to 100°C, more preferably 60°C to 80°C.

In the present disclosure, the extruded sheet is subjected to hot-press molding and cutting to obtain the halogen-free flame-retardant PP rigid flooring. The hot-press molding includes preferably: using the extruded sheet as an intermediate layer to allow the hot-press molding together with the PP integrated film and the PP balance layer.

In the present disclosure, the PP integrated film is preferably a PP film; and the PP balance layer includes the following raw materials: 100 parts of the PP, 1 part to 15 parts of the toughening agent, 0 parts to 50 parts of the magnesium hydroxide, 0 parts to 0.6 parts of the antioxidant, and 0.2 parts to 1 part of the lubricant. The PP balance layer has a thickness of preferably 0.1 mm to 1 mm, more preferably 0.4 mm to 0.8 mm; the PP balance layer is mainly used to keep the entire flooring flat during hot-press molding, thus making the flooring less likely to warp and deform.

In the present disclosure, the hot-press molding is conducted at preferably 150°C to 180°C, more preferably 160°C to 170°C under preferably 10 bar to 100 bar, more preferably 30 bar to 70 bar for preferably 20 min to 60 min, more preferably 30 min to 50 min.

In the present disclosure, the surface of the PP integrated film is further subjected to coating after the hot-press molding is completed: applying a PP surface repair agent, a PP adhesion base oil, and a PP top oil in sequence. A main component of the PP surface repair agent is a polar material with PP-grafted maleic anhydride. The PP surface repair agent is applied at preferably (2-3) g/m², more preferably 2.5 g/m². After applying the PP surface repair agent, infrared baking is preferably conducted. The PP adhesion base oil has a solid content of preferably 90% to 95%.

In the present disclosure, main components of the PP adhesion base oil include one or more of PP, PP-grafted maleic anhydride, and an epoxy polar substance, and preferably further include a wear-resistant, anti-fouling, antibacterial, and scratch-resistant additive. The PP adhesion base oil has a solid content of preferably 90% to 95%. The PP adhesion base oil is preferably applied by coating. The PP adhesion base oil is applied at preferably (5-6) g/m², more preferably 5.5 g/m². After applying the PP adhesion base oil, UV curing is preferably conducted.

In the present disclosure, main components of the PP top oil include one or more of PP, PP-grafted maleic anhydride, and an epoxy polar substance, and preferably further include a wear-resistant, anti-impact, anti-fouling, antibacterial, and scratch-resistant additive. The PP top oil has a solid content of preferably 90% to 95%. The PP top oil is preferably applied by coating. The PP top oil is applied at preferably (9-11) g/m², more preferably 10 g/m². After applying the PP top oil, UV curing is preferably conducted.

In the present disclosure, there are no special requirements on a cutting method, and cutting methods well known to those skilled in the art can be used. The halogen-free flame-retardant PP rigid flooring is preferably further subjected to grooving after the cutting is completed, and a resulting grooved interlocking type is selected from the group consisting of an ordinary interlock and a push-down interlock.

The halogen-free flame-retardant PP rigid flooring and the preparation method thereof provided by the present disclosure are described in detail below in conjunction with the examples, but these examples should not be construed as limiting the protection scope of the present disclosure.

### Example 1

An extruded sheet for preparing a halogen-free flame-retardant PP rigid flooring included the following raw materials:

| | |
|---|---|
| PP powder (PPH-045) | 23.7 parts; |
| magnesium hydroxide (3,000 mesh) | 65 parts; |
| PP-MAH | 3 parts; |
| Vistamaxx 3588FL | 7 parts; |
| antioxidant 1010 | 0.1 parts; |
| antioxidant 168 | 0.2 parts; and |
| stearic acid 1801 | 1 part. |

The PP-MAH was purchased from COACE Chemical Co., Ltd.

A preparation method of the halogen-free flame-retardant PP rigid flooring included the following steps:
The raw materials mentioned above were weighed and mixed at high speed in a high speed mixer for 15 min, a resulting powdery mixture was added into a feeding hopper of the 75 parallel twin-screw sheet extrusion production line, and then a 3.5 mm to 5 mm thick sheet was extruded using a flat twin-screw extruder with an L/D ratio of 40; where 9 temperature zones of a 75 parallel twin-screw extruder had temperatures of 180°C to 190°C, 190°C to 200°C, 190°C to 200°C, 190°C to 200°C, 190°C to 200°C, 190°C to 200°C, 195°C to 205 °C, 200°C to 210°C, and 200°C to 210°C; a sheet mold was at 210°C to 230°C; temperatures of a screen changer, a connecting section, a melt pump, and a connection section in the middle were 200°C to 210°C, 210°C to 220°C, 210°C to 220°C, and 210°C to 220°C, respectively; temperatures of a three-roller cooling and shaping calender were 40°C to 60°C, 60°C to 90°C, and 50°C to 70°C, respectively; and a feeding speed and a main screw speed of the 75 parallel twin-screw extruder were 30 rpm to 50 rpm and 50 rpm to 70 rpm, respectively. The extruded sheet was subjected to hot-press molding with a PP integrated film and a PP balance layer, coated with a surface repair agent, a PP adhesion base oil, and a PP top oil, and then cut by a saw, grooved, applied with a cushioned foam in sequence according to the size requirements to obtain a halogen-free flame-retardant PP rigid interlocking flooring.

### Example 2

| | |
|---|---|
| PP powder (PPH-045) | 17.7 parts; |
| magnesium hydroxide (1,250 mesh) | 70 parts; |
| PP-MAH | 3 parts; |
| Vistamaxx 6102 | 8 parts; |
| antioxidant 1010 | 0.1 parts; |
| antioxidant 168 | 0.2 parts; and |
| stearic acid 1801 | 1 part. |

A preparation method of the halogen-free flame-retardant PP rigid flooring was the same as that in Example 1.

### Example 3

| | |
|---|---|
| PP granules (T30S) | 12 parts; |
| magnesium hydroxide (1,250 mesh) | 75 parts; |
| PP-MAH | 3 parts; |
| silane coupling agent 560 | 1 part; |
| POE | 8 parts; and |
| stearic acid 1801 | 1 part. |

A preparation method of this example was basically the same as that of Example 1, a difference was that: after mixing based on the formula, the raw materials were granulated using a 75 parallel twin-screw granulator, and then a resulting granulated material was used to produce a sheet.

### Comparative Example 1

For comparison, a commercially available PVC SPC stone-plastic interlock flooring was adopted from a manufacturer Zhangjiagang Elegant Home Technology Co., Ltd., with a specification model of 220 mm×1,210 mm×5.0 mm×0.3 mm. The samples of the examples and comparative example were all 220 mm×1,210 mm×5.0 mm×0.3 mm.

### Comparative Example 2

The performances of the flooring samples obtained in the Examples and Comparative Examples were tested, and the results were shown in Table 1.

**Table 1 Performance test results of flooring samples obtained in Examples and Comparative Examples**

| Performance testing | Example 1 | Example 2 | Example 3 | Comparative Examples |
|---|---|---|---|---|
| Heating length change rate | -0.10 | -0.09 | -0.08 | -0.11 |
| High-temperature warping (80°C*6 h) | Upward: 0.2 | Upward: 0 | Upward: 0.2 | Upward: 0.3 |
| | Downward: 0.6 | Downward: 0.5 | Downward: 0.5 | Downward: 1.0 |
| Room-temperature warping (23°C) | Upward: 0.1 | Upward: 0.2 | Upward: 0.1 | Upward: 0.2 |
| | Downward: 0.6 | Downward: 0.5 | Downward: 0.6 | Downward: 0.7 |
| Low-temperature warping (5°C) | Upward: 0 | Upward: 0.3 | Upward: 0.2 | Upward: 0.5 |
| | Downward: 0.7 | Downward: 0.7 | Downward: 0.6 | Downward: 0.9 |
| Peel force | 2.32 | 2.40 | 2.55 | 2.85 |
| Interlocking tensile force | H:5.3 | H:4.9 | H:4.8 | H:5.4 |
| | Z:6.9 | Z:6.5 | Z:6.6 | Z:7.1 |
| Residual indentation | 0.01 | 0.02 | 0.02 | 0.04 |
| Substrate density (g/cm³) | 1.51 | 1.57 | 1.65 | 2.03 |
| Thermal expansion coefficient | 0.2×10⁻⁴ | 0.4×10⁻⁴ | 0.3×10⁻⁴ | 0.4×10⁻⁴ |
| Flame-retardant grade (level) | B1 | B1 | B1 | B1 |
| Oxygen index (%) | 29 | 30 | 31 | 35 |
| Smoke Density | 306 | 288 | 271 | 614 |

The above performance test methods referred to standards ASTM F3261-17, EN ISO 16511, and GB/T 34440-2017.

As shown in Table 1, the halogen-free flame-retardant PP rigid flooring had desirable dimensional stability, high- and low-temperature performances, and mechanical properties, which were almost the same as those of commercially available PVC stone-plastic interlock flooring. However, the halogen-free flame-retardant PP rigid flooring showed better flame-retardant properties, did not contain chlorine, and was safe and environmental-friendly.

### Comparative Example 3

| | |
|---|---|
| PP powder (PPH-045) | 49.7 parts; |
| magnesium hydroxide (3,000 mesh) | 40 parts; |
| PP-MAH | 3 parts; |
| Vistamaxx 3588FL | 7 parts; |
| antioxidant 1010 | 0.1 parts; and |
| antioxidant 1076 | 0.2 parts. |

The sample produced in this example failed to meet the flame-retardant requirements of the flooring after repeated tests.

### Comparative Example 4

| | |
|---|---|
| PP powder (PPH-045) | 10.7 parts; |
| magnesium hydroxide (3,000 mesh) | 82 parts; |
| Vistamaxx 3588FL | 6 parts; |
| antioxidant 1010 | 0.1 parts; |
| antioxidant 1076 | 0.2 parts; and |
| stearic acid 1081 | 1 part. |

The formula in this example was difficult to process and form. Even if a sheet was formed after granulation, its mechanical properties were highly poor to meet the requirements for flooring.

## Claims

1. An extruded sheet for preparing a halogen-free flame-retardant polypropylene (PP) rigid flooring, comprising the following raw materials in mass percentage:
| | |
|---|---|
| PP | 10% to 30%; |
| inorganic flame retardant | 60% to 80%; |
| toughening agent | 1% to 15%; |
| compatibilizer | 1% to 10%; |
| antioxidant | 0.1% to 0.6%; and |
| lubricant | 0.5% to 2%; |
wherein the inorganic flame retardant is magnesium hydroxide, and has a particle size of 1,000 mesh to 5,000 mesh.

2. The extruded sheet for preparing the halogen-free flame-retardant PP rigid flooring according to claim 1, comprising the following raw materials in mass percentage:
| | |
|---|---|
| the PP | 12% to 30%; |
| the inorganic flame retardant | 60% to 75%; |
| the toughening agent | 3% to 10%; |
| the compatibilizer | 1% to 5%; |
| the antioxidant | 0.1% to 0.5%; and |
| the lubricant | 0.5% to 1.5%. |

3. The extruded sheet for preparing the halogen-free flame-retardant PP rigid flooring according to claim 1 or 2, wherein the compatibilizer is one or more selected from the group consisting of a silane coupling agent, a titanate coupling agent, an aluminate coupling agent, and PP-grafted maleic anhydride;
the toughening agent is one or more selected from the group consisting of an ethylene-propylene random copolymer, a polyolefin elastomer (POE), styrene-ethylene-butylene-stryrene (SEBS), and thermoplastic polyurethane (TPU);
the antioxidant is one or more selected from the group consisting of an antioxidant 1010, an antioxidant 168, an antioxidant 264, and an antioxidant 1076; and
the lubricant is one or more selected from the group consisting of paraffin wax, polyethylene (PE) wax, stearic acid, and calcium stearate.

4. The extruded sheet for preparing the halogen-free flame-retardant PP rigid flooring according to claim 1 or 2, wherein the halogen-free flame-retardant PP rigid flooring has a PP integrated film attached to an upper surface and a PP balance layer attached to a lower surface; and a surface of the PP integrated film is covered with an ultraviolet (UV) coating oil.

5. The extruded sheet for preparing the halogen-free flame-retardant PP rigid flooring according to claim 1 or 2, wherein the halogen-free flame-retardant PP rigid flooring has a thickness of 3 mm to 10 mm.

6. A preparation method of a halogen-free flame-retardant PP rigid flooring, comprising the following steps:
mixing the raw materials as defined in any one of claims 1 to 5 of the extruded sheet for preparing the halogen-free flame-retardant PP rigid flooring to obtain a mixed material;
subjecting the mixed material to twin-screw extrusion molding to obtain the extruded sheet; and
subjecting the extruded sheet to hot-press molding and cutting to obtain the halogen-free flame-retardant PP rigid flooring.

7. The preparation method according to claim 6, wherein the mixing is conducted at 800 rpm to 1,200 rpm for 10 min to 20 min.

8. The preparation method according to claim 6, wherein the hot-press molding comprises: using the extruded sheet as an intermediate layer to allow the hot-press molding together with the PP integrated film and the PP balance layer; and
the hot-press molding is conducted at 150°C to 180°C under 10 bar to 100 bar for 20 min to 60 min.

9. The preparation method according to claim 8, wherein the PP integrated film is a PP film; and the PP balance layer comprises the following raw materials: 100 parts of the PP, 1 part to 15 parts of the toughening agent, 0 parts to 50 parts of the magnesium hydroxide, 0 parts to 0.6 parts of the antioxidant, and 0.2 parts to 1 part of the lubricant.

10. The preparation method according to claim 9, wherein the PP balance layer has a thickness of 0.1 mm to 1 mm.

11. The preparation method according to claim 8, wherein the surface of the PP integrated film is further subjected to coating after the hot-press molding is completed; and the coating comprises applying a PP surface repair agent, a PP adhesion base oil, and a PP top oil in sequence.

12. The preparation method according to claim 11, wherein the PP surface repair agent is applied at (2-3) g/m²;
the PP adhesion base oil is applied at (5-6) g/m²; and
the PP top oil is applied at (9-11) g/m².

## Patentansprüche

1. Extrudierte Platte zur Herstellung eines halogenfreien flammhemmenden Polypropylen(PP)-Hartbodens, umfassend die folgenden Rohstoffe in Massenprozent:
| | |
|---|---|
| PP | 10 % bis 30 %; |
| anorganisches Flammschutzmittel | 60 % bis 80 %; |
| Zähigkeitsverbesserer | 1 % bis 15 %; |
| Verträglichkeitsvermittler | 1 % bis 10 %; |
| Antioxidationsmittel | 0,1 % bis 0,6 %; und |
| Gleitmittel | 0,5 % bis 2 %; |
wobei das anorganische Flammschutzmittel Magnesiumhydroxid ist und eine Partikelgröße von 1.000 Mesh bis 5.000 Mesh aufweist.

2. Extrudierte Platte zur Herstellung des halogenfreien flammhemmenden PP-Hartbodens nach Anspruch 1, umfassend die folgenden Rohstoffe in Massenprozent:
| | |
|---|---|
| das PP | 12 % bis 30 %; |
| das anorganische Flammschutzmittel | 60 % bis 75 %; |
| den Zähigkeitsverbesserer | 3 % bis 10 %; |
| den Verträglichkeitsvermittler | 1 % bis 5 %; |
| das Antioxidationsmittel | 0,1 % bis 0,5 %; und |
| das Gleitmittel | 0,5 % bis 1,5 %. |

3. Extrudierte Platte zur Herstellung des halogenfreien flammhemmenden PP-Hartbodens nach Anspruch 1 oder 2, wobei der Verträglichkeitsvermittler einer oder mehrere ausgewählt aus der Gruppe bestehend aus einem Silan-Kopplungsmittel, einem Titanat-Kopplungsmittel, einem Aluminat-Kopplungsmittel und PP-gepfropftem Maleinsäureanhydrid ist;
der Zähigkeitsverbesserer einer oder mehrere ausgewählt aus der Gruppe bestehend aus einem statistischen Ethylen-Propylen-Copolymer, einem Polyolefin-Elastomer (POE), Styrol-Ethylen-Butylen-Styrol (SEBS) und thermoplastischem Polyurethan (TPU) ist;
das Antioxidationsmittel eines oder mehrere ausgewählt aus der Gruppe bestehend aus einem Antioxidationsmittel 1010, einem Antioxidationsmittel 168, einem Antioxidationsmittel 264 und einem Antioxidationsmittel 1076 ist; und
das Gleitmittel eines oder mehrere ausgewählt aus der Gruppe bestehend aus Paraffinwachs, Polyethylen (PE)-Wachs, Stearinsäure und Calciumstearat ist.

4. Extrudierte Platte zur Herstellung des halogenfreien flammhemmenden PP-Hartbodens nach Anspruch 1 oder 2, wobei der halogenfreie flammhemmende PP-Hartboden eine an einer oberen Oberfläche angebrachte PP-integrierte Folie und eine an einer unteren Oberfläche angebrachte PP-Ausgleichsschicht aufweist; und eine Oberfläche der PP-integrierten Folie mit einem Ultraviolett(UV)-Beschichtungsöl bedeckt ist.

5. Extrudierte Platte zur Herstellung des halogenfreien flammhemmenden PP-Hartbodens nach Anspruch 1 oder 2, wobei der halogenfreie flammhemmende PP-Hartboden eine Dicke von 3 mm bis 10 mm aufweist.

6. Verfahren zur Herstellung eines halogenfreien flammhemmenden PP-Hartbodens, umfassend die folgenden Schritte:
Mischen der Rohstoffe wie in einem der Ansprüche 1 bis 5 der extrudierten Platte zur Herstellung des halogenfreien flammhemmenden PP-Hartbodens definiert, um ein Mischmaterial zu erhalten;
Unterziehen des Mischmaterials einem Doppelschnecken-Extrusionsformen, um die extrudierte Platte zu erhalten; und
Unterziehen der extrudierten Platte einem Heißpressformen und Schneiden, um den halogenfreien flammhemmenden PP-Hartboden zu erhalten.

7. Herstellungsverfahren nach Anspruch 6, wobei das Mischen bei 800 U/min bis 1200 U/min für 10 min bis 20 min durchgeführt wird.

8. Herstellungsverfahren nach Anspruch 6, wobei das Heißpressformen umfasst: Verwenden der extrudierten Platte als Zwischenschicht, um das Heißpressformen zusammen mit der PP-integrierten Folie und der PP-Ausgleichsschicht zu ermöglichen; und
das Heißpressformen bei 150 °C bis 180 °C unter 10 bar bis 100 bar für 20 min bis 60 min durchgeführt wird.

9. Herstellungsverfahren nach Anspruch 8, wobei die PP-integrierte Folie eine PP-Folie ist und die PP-Ausgleichsschicht die folgenden Rohstoffe umfasst: 100 Teile des PP, 1 Teil bis 15 Teile des Zähigkeitsverbesserers, 0 Teile bis 50 Teile des Magnesiumhydroxids, 0 Teile bis 0,6 Teile des Antioxidationsmittels und 0,2 Teile bis 1 Teil des Gleitmittels.

10. Herstellungsverfahren nach Anspruch 9, wobei die PP-Ausgleichsschicht eine Dicke von 0,1 mm bis 1 mm aufweist.

11. Herstellungsverfahren nach Anspruch 8, wobei die Oberfläche der PP-integrierten Folie nach Abschluss des Heißpressformens ferner einem Beschichten unterzogen wird; und das Beschichten das Auftragen eines PP-Oberflächenreparaturmittels, eines PP-Haftgrundöls und eines PP-Decköls in dieser Reihenfolge umfasst.

12. Herstellungsverfahren nach Anspruch 11, wobei das PP-Oberflächenreparaturmittel mit (2-3) g/m2 aufgetragen wird;
das PP-Haftgrundöl mit (5-6) g/m2 aufgetragen wird; und
das PP-Decköl mit (9-11) g/m2 aufgetragen wird.

## Revendications

1. Feuille extrudée pour préparer un revêtement de sol rigide en polypropylène (PP) ignifuge sans halogène, comprenant les matières premières suivantes en pourcentage massique :
| | |
|---|---|
| PP | 10 % à 30 % ; |
| retardateur de flamme inorganique | 60 % à 80 % ; |
| agent de durcissement | 1 % à 15 % ; |
| agent de compatibilité | 1 % à 10 % ; |
| antioxydant | 0,1 % à 0,6 % ; et |
| lubrifiant | 0,5 % à 2 % ; |
dans laquelle le retardateur de flamme inorganique est de l'hydroxyde de magnésium, et présente une taille de particule de 1 000 mailles à 5 000 mailles.

2. Feuille extrudée pour préparer le revêtement de sol rigide en PP ignifuge sans halogène selon la revendication 1, comprenant les matières premières suivantes en pourcentage massique :
| | |
|---|---|
| le PP | 12 % à 30 % ; |
| le retardateur de flamme inorganique | 60 % à 75 % ; |
| l'agent de durcissement | 3 % à 10 % ; |
| l'agent de compatibilité | 1 % à 5 % ; |
| l'antioxydant | 0,1 % à 0,5 % ; et |
| le lubrifiant | 0,5 % à 1,5 %. |

3. Feuille extrudée pour préparer le revêtement de sol rigide en PP ignifuge sans halogène selon la revendication 1 ou 2, dans laquelle l'agent de compatibilité est un ou plusieurs éléments sélectionnés dans le groupe consistant en un agent de couplage au silane, un agent de couplage au titanate, un agent de couplage à l'aluminate et un anhydride maléique greffé au PP ;
l'agent de durcissement est un ou plusieurs éléments sélectionnés dans le groupe consistant en un copolymère aléatoire d'éthylène-propylène, un élastomère de polyoléfine (POE), du styrène-éthylène-butylène-styrène (SEBS) et du polyuréthane thermoplastique (TPU) ;
l'antioxydant est un ou plusieurs éléments sélectionnés dans le groupe consistant en un antioxydant 1010, un antioxydant 168, un antioxydant 264 et un antioxydant 1076 ; et
le lubrifiant est un ou plusieurs éléments sélectionnés dans le groupe consistant en la cire de paraffine, la cire de polyéthylène (PE), l'acide stéarique et le stéarate de calcium.

4. Feuille extrudée pour préparer le revêtement de sol rigide en PP ignifuge sans halogène selon la revendication 1 ou 2, dans laquelle le revêtement de sol rigide en PP ignifuge sans halogène présente un film intégré en PP fixé à une surface supérieure et une couche de répartition en PP fixée à une surface inférieure ; et une surface du film intégré en PP est recouverte d'une huile de revêtement ultraviolet (UV).

5. Feuille extrudée pour préparer le revêtement de sol rigide en PP ignifuge sans halogène selon la revendication 1 ou 2, dans laquelle le revêtement de sol rigide en PP ignifuge sans halogène présente une épaisseur de 3 mm à 10 mm.

6. Procédé de préparation d'un revêtement de sol rigide en PP ignifuge sans halogène, comprenant les étapes suivantes :
le mélange des matières premières telles que définies dans l'une quelconque des revendications 1 à 5 de la feuille extrudée pour préparer le revêtement de sol rigide en PP ignifuge sans halogène pour obtenir un matériau mélangé ;
la soumission du matériau mélangé à un moulage par extrusion à double vis pour obtenir la feuille extrudée ; et
la soumission de la feuille extrudée à un moulage par presse à chaud et la découpe de la feuille extrudée pour obtenir le revêtement de sol rigide PP ignifuge sans halogène.

7. Procédé de préparation selon la revendication 6, dans lequel le mélange est effectué à une vitesse de 800 tr/min à 1 200 tr/min pendant 10 min à 20 min.

8. Procédé de préparation selon la revendication 6, dans lequel le moulage par presse à chaud comprend : l'utilisation de la feuille extrudée comme couche intermédiaire pour permettre le moulage par presse à chaud avec le film intégré en PP et la couche de répartition en PP ; et
le moulage par presse à chaud est réalisé à une température de 150 °C à 180 °C sous 10 bar à 100 bar pendant 20 min à 60 min.

9. Procédé de préparation selon la revendication 8, dans lequel le film intégré en PP est un film en PP ; et la couche de répartition en PP comprend les matières premières suivantes : 100 parties du PP, 1 partie à 15 parties de l'agent de durcissement, 0 partie à 50 parties de l'hydroxyde de magnésium, 0 partie à 0,6 partie de l'antioxydant et 0,2 partie à 1 partie du lubrifiant.

10. Procédé de préparation selon la revendication 9, dans lequel la couche de répartition en PP présente une épaisseur de 0,1 mm à 1 mm.

11. Procédé de préparation selon la revendication 8, dans lequel la surface du film intégré en PP est en outre soumise à un revêtement une fois le moulage par presse à chaud terminé ; et le revêtement comprend l'application séquentielle d'un agent de réparation de surface PP, d'une huile de base d'adhérence PP et d'une huile de finition PP.

12. Procédé de préparation selon la revendication 11, dans lequel l'agent de réparation de surface PP est appliqué à (2-3) g/m² ;
l'huile de base d'adhérence PP est appliquée à (5-6) g/m² ; et
l'huile de finition PP est appliquée à (9-11) g/m².
